# EUROPÄISCHE PATENTSCHRIFT

(11) **EP 2 171 216 B1**
(45) Veröffentlichungstag und Bekanntmachung des Hinweises auf die Patenterteilung: **11.09.2013**
(21) Anmeldenummer: 08784357.9
(22) Anmeldetag: 17.07.2008
(51) Int. Cl.: F01D 11/24, F04D 27/02

(54) **REGELUNG FÜR EINE GASTURBINE MIT AKTIV STABILISIERTEM VERDICHTER**
CLOSED-LOOP CONTROL FOR A GAS TURBINE WITH ACTIVELY STABILIZED COMPRESSOR
RÉGULATION POUR UNE TURBINE À GAZ AVEC COMPRESSEUR À STABILISATION ACTIVE

(30) Priorität: 31.07.2007 DE 102007035927
(43) Veröffentlichungstag der Anmeldung: 07.04.2010
(73) Patentinhaber: MTU Aero Engines GmbH, 80995 München (DE)
(72) Erfinder: HORN, Wolfgang, 80796 München (DE); SCHMIDT, Klaus-Jürgen, 81247 München (DE)
(86) Internationale Anmeldenummer: PCT/DE2008/001176
(87) Internationale Veröffentlichungsnummer: WO 2009/015635

(56) Entgegenhaltungen:
- EP-A2- 1 550 791
- DE-A1-102005 045 255
- GB-A- 2 048 386
- GB-A- 2 298 459
- GB-A- 2 363 864
- US-A- 3 901 620
- US-A- 5 340 271
- US-A- 5 344 284
- US-A- 5 431 533

## Beschreibung

Die Erfindung betrifft ein Regelsystem für eine Gasturbine, insbesondere ein Flugtriebwerk, wobei das Regelsystem zur Erhöhung der Verdichterstabilität Einrichtungen zur Schaufelspitzeneinblasung (ASC) und Einrichtungen zur aktiven Spaltregelung (ACC) in wenigstens einem Verdichter aufweist. Außerdem betrifft die Erfindung ein Verfahren zum Regeln einer Gasturbine, insbesondere eines Flugtriebwerks.

Die Stabilitätsreserve von Verdichtern in Gasturbinenflugtriebwerken ist entscheidend für den sicheren Betrieb des Triebwerks. Ein Strömungsabriss in den Verdichterkomponenten des Triebwerks führt zum Pumpen des Triebwerks und kann zum Verlust des Flugzeugs führen. Ein solches Ereignis muss daher durch entsprechende Maßnahmen mit sehr hoher Wahrscheinlichkeit auszuschließen sein.

Die Frontstufen von Hochdruckverdichtern in. Gasturbinentriebwerken arbeiten im Allgemeinen im unteren Lastbereich bzw. insbesondere beim Beginn einer Beschleunigung nahe ihrer Stabilitätsgrenze und sind dadurch für den gesamten Verdichter stabilitätsbestimmend. Bei der Anwendung von Schaufelspitzeneinblasung wird im Allgemeinen davon ausgegangen, dass bei Feststellung einer einsetzenden Instabilität im Triebwerk die Einblasung aktiviert wird, indem energiereiche Luft aus den hinteren Verdichterstufen durch Umblasung den vorderen, an der Stabilitätsgrenze arbeitenden Verdichterstufen bzw. den Stufen des Niederdruckverdichters zugeführt wird und diese stabilisieren. Dies beruht im Wesentlichen auf einer Druckmessung, die bei Erkennung der Druckfluktuation im Verdichter mit Hilfe eines speziellen Algorithmus über den Triebwerksregler die Einblasung aktiviert. Dieser Vorgang spielt sich in wenigen Millisekunden bis zu wenigen 100 ms ab.

Allerdings ist es eine grundlegende Forderung von Seiten der Behörden bzw. der Zellenhersteller, dass bei Ansprechen der Umblasung keine Verzögerung im Schubansprechverhalten oder gar ein so genanntes "Schubloch" beim Triebwerk auftritt. Somit wird aus physikalischen Gesetzmäßigkeiten, die sich aus dem Betriebsverhalten des Gesamtsystems Triebwerk herleiten, aber auch aus Gründen der Zuverlässigkeit einer solchen hochempfindlichen zur Erfassung hoher Frequenzen ausgelegten Druckmessung, eine solche Lösung nicht in allen Betriebsfällen erfolgreich sein können. Ein bereits am Rande der Stabilitätsgrenze arbeitendes Verdichtersystem wird durch Luftentnahme und den Zwang, den Schub aufrecht zu erhalten oder das Ansprechverhalten zu gewährleisten, um ein Schubloch zu vermeiden, kurzzeitig noch stärker belastet und an die Stabilitätsgrenze gedrängt. Dies beruht im Wesentlichen auf der Tatsache, dass der dann schlagartig verringerte Luftdurchsatz durch das Triebwerk durch entsprechend schnell erhöhte Kraftstoffzufuhr kompensiert werden muss. Dies verursacht höhere Turbinentemperaturen und höhere Betriebspunkte im Verdichterkennfeld und damit einen geringeren Stabilitätsabstand. Dieses technische Problem kann nur dadurch gelöst werden, dass der Triebwerksregler mit einer so genannten "Antizipierungslogik" ausgestattet wird, um vor dem vermuteten Einsetzen einer Instabilität die Einblasung bereits ausgelöst und genügend Stabilitätsreserve hergestellt zu haben.

Ferner arbeiten die hinteren Stufen von Hochdruckverdichtern im Allgemeinen im oberen Lastbereich nahe Ihrer Stabilitätsgrenze und sind dadurch für den gesamten Verdichter stabilitätsbestimmend. Der größte Abfall der Stabilitätsreserve tritt in der Regel dann auf, wenn das wenig vorgewärmte Triebwerk auf hohe Leistung beschleunigt wird bzw. im Fluge nach längerem Verharren auf einer niedrigen Laststufe wieder beschleunigt wird. Hier ergeben sich bedingt durch die stark unterschiedlichen Zeitkonstanten in der thermischen Ausdehnung von Gehäuse und rotierenden Bauteilen vorübergehend sehr große radiale Spaltweiten zwischen Laufschaufeln und Gehäuse. Dies führt vorübergehend zu einer Einbuße an Stabilitätsreserve des Verdichters, die durch aktiv verstellbare bzw. einstellbare Gehäuseteile vermieden werden kann. Die Verstellung kann hier durch mechanische, thermische oder andere bekannte Formen der Beeinflussung geschehen. Die Auslösung der Verstellung erfolgt aufgrund eines während des Triebwerksbetriebes kontinuierlich gemessenen Spaltes, der seinen Toleranzbereich überschreitet und nachgestellt werden muss, oder aufgrund einer gemessenen Druckfluktuation, die eine einsetzende Instabilität des Verdichters erwarten lässt und über einen Algorithmus die Reduzierung des Spaltes veranlasst. Beide Varianten greifen auf empfindliche Sensorik zurück, die dem rauen Triebwerksbetrieb in vielen Fällen nicht gewachsen ist und zu erhöhten Wartungskosten und Betriebstörung führen kann.

Die zur Zeit auf dem Markt vorhandenen und zugelassenen Produkte verwenden zur aktiven Stabilisierung ihrer Verdichtungssysteme die Betriebsabblasung, die Verstellleitschaufeln und eine vorübergehende Drosselung der Kraftstoffzufuhr, entweder einzeln oder in Kombination. Diese Eingriffe erfolgen aber erst als Reaktion auf eine bereits erfolgte und durch den Regler messtechnisch erfasste Instabilität des Triebwerks, die mit erheblichen Schubeinbruch einhergehen. Daher sind die bestehenden Verdichtungssysteme mit entsprechend hoher Stabilitätsreserve ausgelegt, damit das Risiko des Pumpens und damit des unerwünschten Schubeinbruchs äußerst gering ist.

Darüber hinaus sind verschiedene Lösungen bekannt, die eine Einblasung zur Stabilisierung des Verdichters vorschlagen. Die vorgeschlagenen Systeme verwenden allerdings im Wesentlichen entsprechende Sensoren, um mit Hilfe eines Algorithmus eine Instabilität festzustellen und dann erst zu reagieren. Ein derartiges System scheitert in der Regel an nicht ausreichend schneller Sensorik, die vor allem auch dem sehr hohen Anspruch an Zuverlässigkeit, Reaktionszeit und Auflösungsvermögen gerecht werden muss.

Ähnlich verhält es sich bei der Spaltbeeinflussung bei im Betrieb befindlichen Triebwerken. Hier werden derzeit nur die Radialspalte im Hochdruckverdichter während des Reisefluges durch Kühlung des Gehäuses zur Erzielung besserer Wirkungsgrade und damit zur Kraftstoff-Verbrauchsreduzierung verringert. In zahlreichen vorgeschlagenen Lösungen wird eine Regelung der Spaltweite während des Triebwerksbetriebes vorgeschlagen, allerdings wird dabei immer die Spaltweite auch gemessen und nachgeregelt.

Durch die Verwendung hochsensibler Sensorik zur Messung des Druckverlaufes im Verdichter und der Spaltweiten steigen nicht nur die Kosten des Triebwerkes, sondern auch die Wartungskosten und die Zuverlässigkeit im Betrieb verringert sich. Falls die Sensorik nicht sehr umfangreich und redundant und damit teuer ausgelegt ist, kann ein Ausfall der Messtechnik sehr schnell auch zum Ausfall des gesamten Triebwerks führen.

Aus dem Dokument GB 2 363 864 A ist ein Regelsystem für eine Gasturbine bekannt, welches zur Erhöhung der Verdichterstabilität eine aktive Spaltregelung (ACC) aufweist. Dabei werden magnetisch geschaltete, pneumatische Verstelleinrichtungen benutzt. Bei der Ausführung gemäß Figur 10 und 11 dieses Dokuments findet zeitweise auch eine Schaufelspitzeneinblasung (ASC) statt.

Das Dokument US 5 431 533 A betrifft ein sogenanntes Casing Treatment, d. h. eine Rezirkulationsstruktur im Bereich von Verdichterschaufelspitzen zur Erhöhung der aerodynamischen Stabilität. Der Strömungsquerschnitt dieser Struktur ist regelbar ausgerührt.

Das Dokument DE 10 2005 045 255 A1 offenbart ein Regelsystem mit einer aktiven Spaltregelung (ACC) für einen Verdichter, welches mit einer Luftabblasung kombiniert ist.

Aus den Dokumenten US 3 901 620 A und US 5 340 271 A sind Regelsysteme zur Verdichterstabilisierung bekannt, welche mit Luftabblasung bzw. Schaufelspitzeneinblasung (ASC) arbeiten.

Das Dokument GB 2 298 459 A begriff ein Regelsystem zur Verdichterstabilisierung, bei dem mittels einer aktiven, magnetischen Rotorlagerung der Rotor radial auslenkbar ist, um das Strömungsfeld stabilisierend zu beeinflussen.

Der Erfindung liegt daher die Aufgabe zugrunde, die oben genannten technischen Probleme des Standes der Technik zur vermeiden und ein verbessertes Regelsystem für ein Gasturbinentriebwerk eines Luftfahrzeugs zum aktiven Stabilisieren des Verdichters zur Verfügung zu stellen.

Diese Aufgabe wird erfindungsgemäß durch eine Vorrichtung mit den Merkmalen des Patentanspruchs 1 sowie ein Verfahren mit den Merkmalen des Patentanspruchs 6 gelöst. Vorteilhafte Ausführungsformen und Weiterbildungen der Erfindung sind in den Unteransprüchen angegeben.

Das erfindungsgemäße Regelsystem für ein Gasturbinentriebwerk eines Luftfahrzeugs weist zur Erhöhung der Verdichterstabilität Einrichtungen zur Schaufelspitzeneinblasung (ASC) auf, die bei Bedarf aktiviert werden, weiterhin weist es Einrichtungen zur aktiven Spaltregelung (ACC) auf, womit der Radialspalt im Verdichter in einem optimalen Betriebsbereich gehalten wird. Das Regelsystem weist einen gemeinsamen Triebwerksregler für beide Einrichtungen (ASC, ACC) auf und ist mit einer Antizipierungslogik ausgestattet.

Erfindungsgemäß ist ein Vorhersagemodell für den Pumpgrenzabstand vorgesehen, welches mit der Antizipierungslogik kombinierbar ist.

Durch die Erfindung werden die technischen Probleme des Standes der Technik vermieden und ein verbessertes Regelsystem für ein Gasturbinentriebwerk eines Luftfahrzeugs zum aktiven Stabilisieren des Verdichters zur Verfügung gestellt.

Dabei kommt im Triebwerksverdichter eine Kombination aus Umblasung in den vorderen Stufen und einer aktiven Spaltbeeinflussung in den hinteren Stufen zum Einsatz. Hierdurch werden die Vorteile beider Stabilisierungsmethoden vollständig ausgenutzt und der Verdichter kann von vornherein mit einer niedrigeren Auslegungspumpgrenze ausgelegt werden. Die erfindungsgemäße Lösung kann mit passiven Stabilisierungsmaßnahmen (z.B. Casing Treatment) kombiniert werden. Auch dadurch kann der Verdichter vorteilhafterweise mit entsprechend weniger Pumpgrenze ausgelegt werden. Erfindungsgemäß beschränkt sich die Anwendung aktiver, geregelter Stabilisierungsmaßnahmen nicht auf den Hochdruckverdichter, sondern bezieht sich auf jeden Verdichter im Triebwerk, also auch auf den Niederdruckverdichter.

Zur Nutzung der Möglichkeiten beider Systeme, d.h. der aktiven Spaltregelung und der Schaufelspitzeneinblasung, sowohl in der Einzelanwendung als auch in Kombination kommen im Triebwerksregler geeignete Algorithmen zum Einsatz.

Erfindungsgemäß wird die Umblasung nur temporär aktiviert, sobald zusätzlich implementierte Regelgesetze ein kurz bevorstehendes bzw. bereits in der Ausführung befindliches kritisches Beschleunigungs- bzw. Verzögerungs-Manöver erkannt haben, in dem vordefinierte Schwellwerte überschritten werden. D.h. es wird ein kritischer Zustand festgestellt, wo der Verdichter mehr Stabilitätsreserve benötigt. Dabei wird in einem speziellen Algorithmus auf die folgenden Parameter einzeln bzw. in Kombination zurückgegriffen, um eine Antizipierung vornehmen bzw. eine Reaktion in der Triebwerkssteuerung erfolgen lassen zu können:
- Die Änderung bzw. die Änderungsgeschwindigkeit des Schubhebelstellsignals;
- die Änderung bzw. Änderungsgeschwindigkeit der Wellendrehzahl;
- das ,Commandsignal' des ,Ratingparameters' bzw. dessen Änderung;
- die Änderung bzw. Änderungsgeschwindigkeit des Kraftstoffdurchsatzes;
- Eingangs- bzw. Austrittsdruck und -temperatur des Triebwerks bzw. des Verdichters - der Parameter aus dem Verhältnis Kraftstoffdurchsatz zu Verdichterenddruck;
- die Turbinen- bzw. Abgastemperatur des Triebwerks und alle weiteren evtl. gemessenen oder synthetisierten bzw. daraus abgeleiteten Parameter.

Darüber hinaus kann durch Übertragung geeigneter Parameter von der Flugzeugzelle, wie Anstellwinkel des Flugzeugs bzw. Änderungsgeschwindigkeit des Anstellwinkels, Waffenabschuss etc., zusätzlich die Antizipierung eines weiteren kritischen Manövers insbesondere für den Niederdruckverdichter erfolgen und eine Umblasung aktiviert werden.

Sobald bestimmte vordefinierte Grenzwerte wieder unterschritten oder kritische Grenzwerte überschritten werden, werden die Einblase-Ventile wieder geschlossen und der stationäre Zustand wieder hergestellt.

Zusätzlich kann die Steuerung auch mit jeder Art von einer auf Messsignalen basierenden Regelung des Systems gekoppelt werden. Wichtig ist hier, in der Systemauslegung bereits ein möglichst kleines Todvolumen zwischen den Stellgliedern und der Einblasestelle zu erzeugen, um die Todzeit möglichst gering zu halten. Gemäß einer vorteilhaften Ausführungsform der Erfindung kann die Bereitstellung eines entsprechend dimensionierten Speichervolumens nahe der Einblasestelle vorgesehen sein, damit ohne merkliche Rückwirkung auf die Drucksituation an der Entnahmestelle im Gaspfad bei Bedarf bereits ausreichend Volumen nahe der Einblasestelle zur Verfügung steht.

Eine weitere vorteilhafte Ausführungsform der Erfindung kann die Kopplung der Antizipierungslogik mit einer Logik sein, die die Alterung des Triebwerks antizipiert.

Der Verstellmechanismus des Gehäuses wird erfindungsgemäß über zusätzlich implementierte Regelgesetze so gesteuert, dass die Radialspalte im Hochdruckverdichter während des Triebwerksbetriebes immer im optimalen Bereich gehalten werden.

Zur Erhöhung der Regelgüte können vorteilhafterweise Spaltsensoren zum Einsatz kommen, die das Spaltsignal zum Regler rückführen. Die Spaltregelung gewährleistet damit kontinuierlich ausreichende Stabilität des Verdichters.

Dazu kommt ein vereinfachtes Spaltmodell zum Einsatz, das folgende Eigenschaften aufweist:
- Berücksichtigung der Fliehkraftdehnung des Rotors;
- Berücksichtigung der augenblicklichen thermischen Dehnung von Rotor und Gehäuse - Vorhersage, der in naher Zukunft zu erwartenden thermischen Dehnung;
- Kopplung dieses Algorithmus mit einer Logik, die die thermische Vorgeschichte des Triebwerks aufzeichnet;
- Kopplung mit einer Logik, die die Alterung (Betriebszeit und/oder Zyklenzähler und/oder Gastemperaturen) erfasst, bewertet und antizipiert.

Hierzu wird einzeln bzw. in Kombination auf folgende Parameter zurückgegriffen, die im Regelfall bereits im Triebwerksregler aufgezeichnet und für die Regelung des Triebwerks verwendet werden:
- Die Änderung bzw. die Änderungsgeschwindigkeit des Schubhebelstellsignals;
- die Änderung bzw. Änderungsgeschwindigkeit der Wellendrehzahl;
- das ,Commandsignal' des ,Ratingparameters' bzw. dessen Änderung;
- die Änderung bzw. Änderungsgeschwindigkeit des Kraftstoffdurchsatzes;
- Eingangs- bzw. Austrittsdruck und -temperatur des Triebwerks bzw. des Verdichters;
- der Parameter aus dem Verhältnis Kraftstoffdurchsatz zu Verdichterenddruck;
- die Turbinen- bzw. Abgastemperatur des Triebwerks;
und alle weiteren evtl. gemessenen oder synthetisierten bzw. daraus abgeleiteten Parameter.

Darüber hinaus kann durch Übertragung geeigneter Parameter von der Flugzeugzelle wie g-Last bzw. Änderungsgeschwindigkeit der g-Last eine weitere Optimierung der Logik insbesondere für hochagile Kampfflugzeuge stattfinden.

Heutige elektronische Regler erlauben die Aufzeichnung begrenzter Datenmengen über der Zeit und die Ausführung komplexer Rechenoperationen. Dies wird in der vorliegenden Erfindung genutzt, um die thermische Vorgeschichte des Triebwerks abbilden und das Spaltmodell mit entsprechendem Input versorgen zu können.

Die Kopplung der Sensorik mit dem Spaltmodell bietet eine höhere Genauigkeit des eingestellten Radialspaltes und stellt eine Redundanz bei Ausfall eines Teils bzw. der gesamten Messtechnik dar.

Das erfindungsgemäße Verfahren zum Regeln eines Gasturbinentriebwerk eines Luftfahrzeugs weist folgende Schritte auf:
- Ansteuern eines Gehäuseverstellmechanismus entsprechend des aktuellen Flugzustands zum Anpassen der Spaltbreite des Hochdruckverdichters;
- Zusätzlich Messung der Spaltbreite und Vergleich des Ist-Werts mit dem Soll-Wert;
- Erfassen von kritischen Beschleunigungs- bzw. Verzögerungsmanövern und aktivieren der Schaufelspitzeneinblasung.

Die Einstellung und Regelung der Spaltbreite erfolgt dabei durch spezielle Algorithmen in Abhängigkeit von im Triebwerk während des Betriebs vorgenommenen Spaltmessungen. Die tatsächliche Einstellung des Spaltes kann hier durch mechanischen oder thermischen Einfluss bzw. auch durch spezielle Werkstoffe wie Formgedächtnislegierungen geschehen. Zusätzlich erfolgt der Einsatz von Spaltmodellen in der Regelung zur Validierung der Messsignale, d.h. zum Ist- und Soll-Wert-Vergleich, und als Back-up bzw. zur Erhöhung der Redundanz bei Ausfall von Messtechnik. Die Spaltmodelle können Algorithmen zur Berechnung der Fliehkraftdehnung, zur thermischen Dehnung und zur Änderung des Spaltes durch Alterung bzw, unter g-Last beinhalten. Es findet also eine Kombination von modellbasierten Regelungsverfahren mit Verfahren, bei denen der Spalt im Betrieb gemessen wird statt. Dabei soll die Spaltmessung als Back-up für die Validierung des modellbasierten Verfahrens dienen.

Als herausragenden Vorteil erlaubt die Kombination von Umblasung und aktiver Spaltkontrolle in einem Verdichter weitestgehend den Verzicht auf eine Betriebsabblasung und Verstellleitschaufeln. Deren Aufgaben werden in der Teillast und insbesondere im tiefen Teillastbereich (Starten) durch die Umblasung wahrgenommen. Damit werden Komplexität, Kosten und Gewicht reduziert und die Zuverlässigkeit erhöht, da die Vorteile des neuen Systems überwiegen.

Durch die Erfindung können die Verdichterkomponenten von Beginn an über den gesamten Lastbereich mit weniger Stabilitätsreserve ausgelegt werden und dadurch deren Wirkungsgrade weiter gesteigert werden bzw. durch optimierte Bauweise Gewicht eingespart werden.

Ein weiterer Vorteil der Erfindung ist, dass sie ohne zusätzliche, teure und empfindliche Instrumentierung, die Zuverlässigkeit, Herstell- und Wartungskosten negativ beeinflussen würde, auskommt. Es wird im Wesentlichen auf die bereits vorhandene, für den Triebwerksbetrieb verwendete Instrumentierung zurückgegriffen.

Zusätzlich kann die Erfindung auch mit Messtechnik für Druck und Spaltweiten kombiniert werden und würde dadurch die für die empfindliche Messtechnik erforderliche Redundanz liefern. Damit würde die Zuverlässigkeit der Triebwerke im Betrieb entsprechend gesteigert und weniger Sicherheitsabstände in der Auslegung der Stabilitätsgrenze des Verdichters notwendig.

Ferner eignet sich die erfindungsgemäße Lösung zum kostengünstigen Nachrüsten bereits vorhandener Triebwerke.

Triebwerke, die sich in der Entwicklung befinden, können durch die vorliegende Erfindung entweder mit höherem Wirkungsgrad, höherem Druckverhältnis oder kostengünstiger in optimierter Bauweise ausgelegt werden. Alternativ kann die gewonnene Reserve an Pumpgrenze gegen eine erhöhte Reserve für die Verschlechterung des Triebwerks/Verdichters im Betrieb oder eine verbesserte Triebwerksdynamik eingetauscht werden.

Triebwerke, die zukünftig zu entwickeln sind, können von vornherein durch die vorliegende Erfindung mit geringerem Pumpgrenzenabstand ausgelegt werden und dadurch ein höherer Auslegungswirkungsgrad erzielt bzw. mehr Freiheitsgrade in der Auslegung erlangt werden.

Weitere die Erfindung verbessernde Maßnahmen werden nachstehend gemeinsam mit der Beschreibung eines bevorzugten Ausführungsbeispiels der Erfindung anhand der Figuren näher dargestellt. Die Figuren zeigen:
- Fig. 1: eine schematische Darstellung eines erfindungsgemäßen Regelsystems für eine Gasturbine mit aktiv stabilisiertem Verdichter;
- Fig. 2: eine schematische Darstellung eines Hochdruckverdichters mit kombinierter aktiver Pumpregelung und aktiver Gehäuseverstellung;
- Fig. 3: eine schematisch beispielhafte Darstellung einer aktiven Stabilisierung durch Schaufelspitzeneinblasung;
- Fig. 4: eine schematische beispielhafte Darstellung für die Auslegung einer aktiven Spaltregelung;
- Fig. 5: ein Regelungsschema für die aktive Spaltregelung;
- Fig. 6: ein Regelungsschema für die aktive Stabilitätsregelung durch Schaufelspitzeneinblasung;

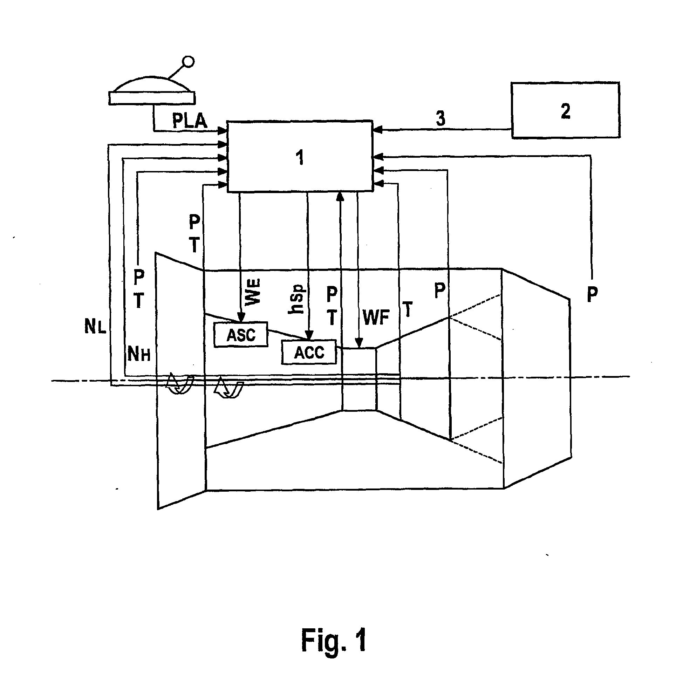

Figur 1 zeigt eine schematische Darstellung eines erfindungsgemäßen Regelsystems für eine Gasturbine mit aktiv stabilisiertem Verdichter. Darin wird gezeigt, dass die für die allgemeine Triebwerksregelung erfassten Triebwerksdaten, wie Temperaturen T, Drücke P, Drehzahlmessungen NL, NH und Schubhebelstellung PLA, auch die Eingangsparameter für den Triebwerksregler 1 des erfindungsgemäßen Regelsystems bilden. Zusätzlich können noch Daten aus der Flugzeugavionik 2, welche die Fluglage und Flugmanöver 3 anzeigen, hinzugezogen werden. Mit diesen, bereits im Stand der Technik erfassten Parametern, werden die im erfindungsgemäßen Regelsystem hinterlegten Algorithmen, das Spaltmodell und die Antizipierungslogik, beaufschlagt. Über entsprechende Steuersignale W_{E} für die Schaufelspitzeneinblasung ASC (Active Surge Control) und h_{Sp} für die Spaltregelung ACC (Active Clearance Control), werden die entsprechenden Einrichtungen am Verdichter angesteuert. Die Steuerung der Brennstoffeinspritzung WF soll hier nur am Rande erwähnt sein.

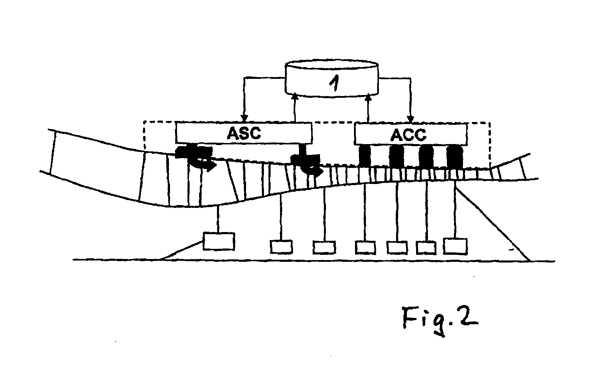

Figur 2 zeigt eine schematische Darstellung eines Hochdruckverdichters mit kombinierter aktiver Pumpregelung (ASC) durch Einblasung / Umblasung und aktiver Gehäuseverstellung (ACC) zur Spaltregulierung. Die entsprechenden Einrichtungen ASC und ACC werden durch einen Triebwerksregler 1, wie in Figur 1 beschrieben angesteuert. Die ASC und ACC Systeme können an jedem beliebigen Ort im Verdichter angebracht sein.

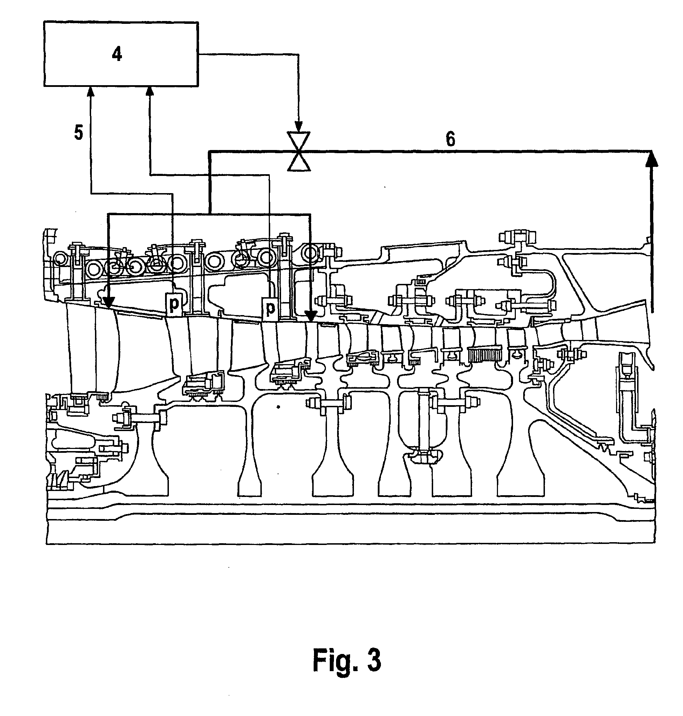

Figur 3 zeigt eine schematisch beispielhafte Darstellung einer aktiven Stabilisierung durch Schaufelspitzeneinblasung. Dabei wird ein Regler 4, der Teil des Triebwerksreglers sein kann, mit entsprechenden Druckmesswerten 5 beaufschlagt. Anhand der Druckmesswerte, vor allem aber aufgrund der Antizipationslogik, welche Betriebszustände nahe der Stabilitätsgrenze des Niederdruckverdichters antizipiert, reagiert der Regler 4 durch temporäres Umblasen 6 von Druckluft in die Schaufelspitzen der vorderen Verdichterstufen. Die Position der Luftentnahme und der Einblasung wird entsprechend der Verdichterabstimmung gewählt.

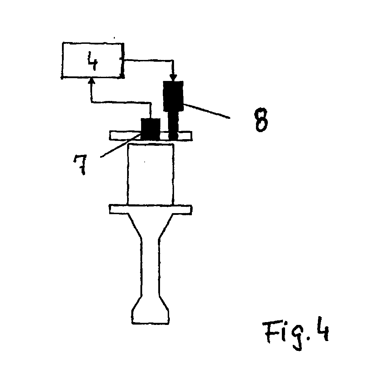

Figur 4 zeigt eine schematische beispielhafte Darstellung für die Auslegung einer aktiven Spaltregelung. Dabei erfasst der Regler 4 Messwerte der Spaltmessung 7 und gleicht diese mit einem im Speicher hinterlegten Spaltmodell ab. Im Ergebnis wird eine Spaltverstellung 8 angesteuert, so dass der Schaufelspitzenspalt im Hochdruckverdichter in jedem Betriebszustand optimal ist.

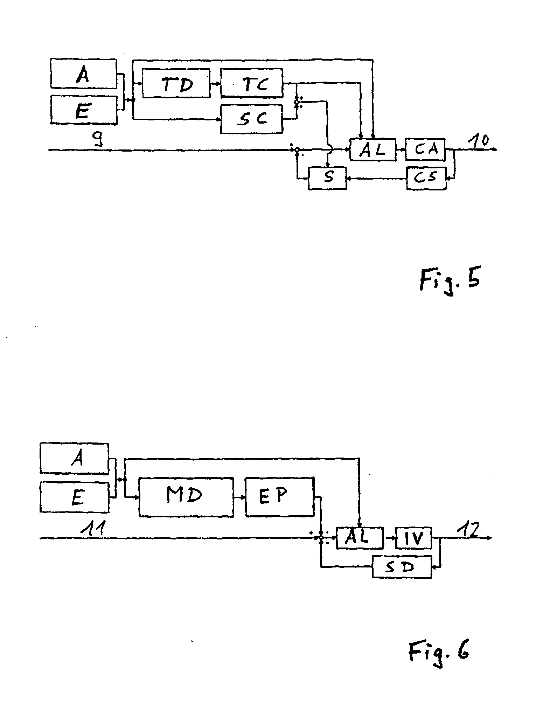

Figur 5 zeigt ein Regelungsschema für die aktive Spaltregelung. Dabei sind mit A

Flugzeugdaten: PLA, Flugmodus, Mn, α, G-Last,..., mit E Antriebsdaten: N, T2, T25, T3, EPR,..., mit TD Transienten Erfassung: |dN/dt|>Schwellenwert; t<Schwellenwert, mit TC Transienten Spalt Modell: s=f(t,Q), mit SC Stationäres Spalt Modell: s=f(N,T25), mit AL Antizipationslogik, mit CA Spalt Aktuator, mit CS Spaltsensor und mit S Signalerfassung bezeichnet. Durch den geschlossenen Regelkreis wird der Sollwert, d.h. der minimale Spalt 9, mit dem Ist-Wert, d.h. dem tatsächlichen Spalt verglichen.

Figur 6 zeigt ein Regelungsschema für die aktive Stabilitätsregelung durch Schaufelspitzeneinblasung. Darin sind mit A Flugzeugdaten: PLA, Flugmodus, Mn, α, G-Last,..., mit E Antriebsdaten: N, T2, T25, T3, EPR,..., mit MD

Kritische Manövererfassung: dN/dt>Schwellenwert; P3/P25-SL<Schwellenwert; t<Schwellenwert, mit EP Antriebsschutzlogik: N2C>Schwellenwert; EGT>Schwellenwert, mit IV Injektionsventil und mit SD Strömungsabriss-/Pump-Detektion bezeichnet. Auch hier ist ein geschlossener Regelkreis zum Vergleich des Soll-Wertes, d.h. der Ziel-Verdichterstabilität, mit dem Ist-Wert, d.h. der tatsächlichen Stabilität, vorgesehen.

Die vorliegende Erfindung beschränkt sich in ihrer Ausführung nicht auf das vorstehend angegebene bevorzugte Ausführungsbeispiel. Vielmehr ist eine Anzahl von Varianten denkbar, welche von der in den Ansprüchen dargestellten Lösung auch bei grundsätzlich anders gearteten Ausführungen Gebrauch macht.

## Patentansprüche

1. Regelsystem für eine Gasturbine, insbesondere ein Flugtriebwerk, wobei das Regelsystem zur Erhöhung der Verdichterstabilität Einrichtungen zur Schaufelspitzeneinblasung (ASC) in wenigstens einem Verdichter aufweist, die bei Bedarf aktiviert werden, wobei das Regelsystem Einrichtungen zur aktiven Spaltregelung (ACC) in wenigstens einem Verdichter aufweist, womit der Radialspalt im Verdichter in einem optimalen Betriebsbereich gehalten werden kann, wobei das Regelsystem einen gemeinsamen Triebwerksregler (1) für beide Arten der Einrichtungen (ASC, ACC) aufweist, und wobei das Regelsystem eine Antizipierungslogik aufiweist,
**dadurch gekennzeichnet, dass**
ein Vorhersagemodell für den Pumpgrenzabstand vorgesehen ist, welches mit der Antizipierungslogik kombinierbar ist, wobei nahe der Einblasstelle der Schaufelspitzeneinblasung ein Speicherreservoir für Druckluft zur Vermeidung von Todzeiten vorgesehen ist.

2. Regelsystem nach Patentanspruch 1,
**dadurch gekennzeichnet, dass**
zur Spaltregelung mechanisch, elektrisch, pneumatisch, hydraulisch und/oder thermisch verstellbare Gehäuseteile vorgesehen sind.

3. Regelsystem nach einem der vorangehenden Patentansprüche,
**dadurch gekennzeichnet, dass**
Sensoren zur Spaltmessung (7) vorgesehen sind.

4. Regelsystem nach einem der vorangehenden Patentansprüche,
**dadurch gekennzeichnet, dass**
ein Spaltmodell-Algorithmus zur Regelung der Spalthöhe und Validierung der Messsignale vorgesehen ist.

5. Verfahren zum Regeln einer Gasturbine, insbesondere eines Flugtriebwerks, wobei das Verfahren folgende Schritte aufweist:
- Ansteuern eines Gehäuseverstellmechanismus entsprechend des aktuellen Flugzustands zum Anpassen der Spalthöhe wenigstens eines Verdichters;
- Zusätzlich Messung der Spalthöhe und Vergleich des Ist-Werts mit dem Soll-Wert;
- Erfassen von kritischen Beschleunigungs- bzw. Verzögerungsmanövern und bedarfsweises Aktivieren einer Schaufelspitzeneinblasung, unter Anwendung einer Antizipierungslogik,
**dadurch gekennzeichnet, dass**
die Antizipierumgslogik mit einem Vorhersagemodell des Pumpgrenzabstands gekoppelt wird.

6. Verfahren nach Patentanspruch 5, wobei zusätzlich geeignete Parameter der Flugzeugzelle zum Antizipieren und Erkennen kritischer Manöver verarbeitet werden.

## Claims

1. A closed-loop control for a gas turbine, in particular an aircraft engine, wherein in order to increase the compressor stability the closed-loop control has devices for blade tip injection (ASC) in at least one compressor that are activated when required, wherein the closed-loop control has devices for active clearance control (ACC) in at least one compressor, whereby the radial clearance in the compressor can be kept in an optimum operating range, wherein the closed-loop control has a common engine-controller (1) for both types of devices (ASC, ACC), and wherein the closed-loop control has an anticipation logic,
**characterised in that**
there is provided for the surge limit interval a predictive model which can be combined with the anticipation logic, wherein provided close to the injection point of the blade tip injection there is a storage reservoir for compressed air in order to avoid dead times.

2. A closed-loop control according to claim 1,
**characterised in that**
mechanically, electrically, pneumatically, hydraulically and/or thermally adjustable housing portions are provided for the clearance-control.

3. A closed-loop control according to one of the preceding claims,
**characterised in that**
sensors for clearance-measurement (7) are provided.

4. A closed-loop control according to one of the preceding claims,
**characterised in that**
a clearance-model algorithm is provided for controlling the clearance-height and validating the measurement signals.

5. A method for controlling a gas turbine, in particular an aircraft engine,
wherein the method has the following steps:
- activation of a housing-adjusting mechanism according to the current flight status for adapting the clearance-height of at least one compressor;
- additionally, measurement of the clearance-height and comparison of the actual value with the desired value;
- detection of critical acceleration or deceleration manoeuvres and, if required, activation of blade tip injection, with use of an anticipation logic, **characterised in that**
the anticipation logic is coupled with a predictive model of the surge limit interval.

6. A method according to claim 5, wherein suitable parameters of the airframe are additionally processed in order to anticipate and recognize critical manoeuvres.

## Revendications

1. Système de régulation pour une turbine à gaz, en particulier pour un groupe motopropulseur d'avion, le système de régulation présentant, afin d'améliorer la stabilité des compresseurs, des équipements d'injection à la pointe des aubes (ASC) dans au moins un compresseur, lesquels peuvent être activés si besoin, le système de régulation présentant des équipements de régulation active du jeu (ACC) dans au moins un compresseur, lesquels permettent de maintenir le jeu radial dans le compresseur dans une plage de fonctionnement optimal, le système de régulation présentant un régulateur de groupe motopropulseur (1) commun pour les deux types d'équipements (ASC, ACC), et le système de régulation présentant une logique d'anticipation,
**caractérisé en ce**
**qu'**est prévu un modèle de prévision pour la distance limite entre les pompes, lequel peut être combiné à la logique d'anticipation, un réservoir destiné à l'air comprimé étant prévu à proximité du lieu d'injection à la pointe des aubes afin d'éviter les temps morts.

2. Système de régulation selon la revendication 1,
**caractérisé en ce**
**que** sont prévues des parties de carter ajustables mécaniquement, électriquement, pneumatiquement, hydrauliquement et/ou thermiquement afin de régler le jeu.

3. Système de régulation selon l'une quelconque des revendications précédentes,
**caractérisé en ce**
**que** sont prévus des capteurs servant à mesurer le jeu (7).

4. Système de régulation selon l'une quelconque des revendications précédentes,
**caractérisé en ce**
**qu'**est prévu un algorithme de modèle de jeu servant à régler la hauteur de jeu et à valider les signaux de mesure.

5. Procédé servant à réguler une turbine à gaz, en particulier un groupe motopropulseur d'avion, le procédé présentant les étapes qui suivent consistant à :
- commander un mécanisme d'ajustement de carter selon l'état du moment de l'avion afin d'adapter la hauteur de jeu au moins d'un compresseur ;
- mesurer en complément la hauteur de jeu et comparer la valeur réelle à la valeur de consigne ;
- détecter des manoeuvres critiques d'accélération ou de décélération et si besoin activer une injection à la pointe des aubes, en utilisant une logique d'anticipation,
**caractérisé en ce**
**que** la logique d'anticipation est couplée à un modèle de prévision de la distance limite entre les pompes.

6. Procédé selon la revendication 5, des paramètres appropriés supplémentaires de la cellule d'avion étant traités afin d'anticiper et d'identifier des manoeuvres critiques.
